# EUROPEAN PATENT APPLICATION

(11) **EP 4 760 424 A1**
(43) Date of publication of application: **17.06.2026**
(21) Application number: 24219768.9
(22) Date of filing: 13.12.2024
(51) Int. Cl.: G05B 19/418

(54) **COMPUTER-IMPLEMENTED METHOD TO OBTAIN RESOURCE USAGE DATA OF AN INDUSTRIAL PROCESS IN AN INDUSTRIAL PLANT**

(71) Applicant: ABB SCHWEIZ AG, 5400 Baden (CH)
(72) Inventor: SCHOCH, Nicolai, 69120 Heidelberg (DE); LINSBAUER, Lukas, 69221 Dossenheim (DE); HOERNICKE, Mario, 76829 Landau (DE); STARK, Katharina, 69469 Weinheim (DE); GRUENER, Sten, 69514 Laudenbach (DE); ESKANDANI, Nafise, 64380 Rossdorf (DE); THODE, Sara Emilie, 0661 Oslo (NO); BECKER, Pascal, 76676 Graben-Neudorf (DE)
(74) Representative: Maiwald GmbH

(57) **Abstract**

A computer-implemented method comprising: obtaining process plant data (1) indicative at least of a configuration of at least one process module (11) of a process plant (10); providing the process plant data (1) for processing by a generative artificial intelligence, GAI, processing component for obtaining resource usage data (2) indicative of usage of one or more process resources in an industrial process of the at least one process module (11) of the process plant; and obtaining the resource usage data (2) from the processing by the GAl processing component (20).

## Description

### TECHNICAL FIELD

The present invention generally relates to processing data of a process plant and obtaining information for a resource usage model of the process plant.

### BACKGROUND

A process plant refers to a facility or an industrial setup that performs processing of substances and materials to produce, for example, goods, chemicals, energy, or other industrial products. For example, the process plant may be a chemical manufacturing plant, a power plant, water treatment plant, a food processing plant or a pharmaceutical production plant. In such process plants, various operations may be carried out by different modules of the process plant either independently or interacting with each other. Such operations may be running under varying operational and environmental conditions of the modules. The operational and environmental conditions may affect an efficiency of each of the modules. Accordingly, the efficiency of each of the modules may affect an overall performance of the process plant. Total resource consumption of the processing of the process plant may be a measure for the performance of the process plant.

It may be therefore important to consider a resource usage model of the process plant, in order to best plan or engineer or automate the process plant in an engineering phase, and/or to monitor and control the performance of the processing in the process plant in an operational phase. An energy model is an example of a resource usage model. The energy model of the process plant can be identified based on the operational and environmental conditions of the modules of the process plant. The energy model may therefore be individually adapted and used for operating different industrial processes in the process plant.

Although such energy models may provide valuable insights into the performance of the process plant and be useful in optimizing the industrial process, the challenge lies in efficiently configuring the energy model. Until now, the energy model has been configured manually. That is, a human operator of the process plant has to manually set up the energy model by configuring the modules with the respective operational environmental conditions. The configuring may include reading information out of the each of the modules, entering manually the information in a system for generating the energy model, and formatting the information in a file format to be used as an input of the energy model. This manual configuration of the energy model may be prone to error and be inefficient.

### DISCLOSURE OF THE INVENTION

The above problems are solved by the subject-matter of independent claims. Preferred embodiments are given by the subject-matter of dependent claims. Further examples are provided for facilitating the understanding of the invention.

According to an embodiment of the present invention, there is provided a computer-implemented method, comprising: obtaining process plant data indicative at least of a configuration of at least one process module of a process plant, providing the process plant data for processing by a generative artificial intelligence, GAI, processing component for obtaining resource usage data indicative of usage of one or more process resources in an industrial process of the at least one process module of the process plant, and obtaining the resource usage data from the processing by the GAI processing component.

The process plant may for example be a facility or an industrial setup that performs an industrial process of substances and materials to produce, for example, goods, chemicals, energy, or other industrial products. Any plant configured for any type of industrial process may be the process plant. The industrial process may be a process to be performed by the process plant. The process plant may comprise one or more process modules. The one or more process modules may be components of the process plant, wherein each one of the process modules may be configured for a different sub-process or part in the industrial process. In other words, each one of the process modules may handle a specific part or task in the industrial process. Each one of the process modules can comprise one or more process units, which may generally be any technical equipments or devices, e.g. sensors, actuators, and similar.

The process plant data may be data that is obtained directly or indirectly from the process plant, in particular from a control system of the process plant, but not only. Specifically, the process plant data may comprise data of each of the one or more process modules of the process plant.

The GAI processing component may be a physical or a functional component comprising a GAI model. The GAI model may be a generative model to produce text, image, video or other forms of data. The GAI model may be a single machine learning model or may refer to distributed models. The GAI processing component may be arranged inside the process plant. For example, the GAI processing component may be a computer for controlling the process plant. Additionally, or alternatively, the GAI processing component may be arranged outside the process plant. For example, the GAI processing component may be arranged in an external cloud server accessible from the process plant. The processing by the GAI process component may comprise a training of the GAI model. Alternatively, the GAI process component may be pre-trained. The pre-trained GAI process component may be trained on a large dataset and can be fine-tuned for a specific task. The pre-trained GAI process component may comprise a GAI model with a set initial weights and biases which are already adapted to produce the desired text, image, video or other forms of data. Therefore, the processing by the GAI process component may comprise fine-tuning of the GAI model, without training the GAI model from the scratch. According to an example of the present invention, the GAI model may be fine-tuned based on the process plant data to obtain the resource usage data. The training data for the fine-tuning may for example comprise process plant data and, additionally, resource usage data that was manually derived from the process plant data, e.g. by a human operator as described above. The processing by the GAI process component may further comprise use of the trained GAI model to output the resource usage data. The GAI process component may be configured for automatically extracting and formatting required information from the process plant data to setup the resource usage data.

The resource usage data may comprise the usage of one or more process resources in the industrial process of the at least one process module of the process plant. The one or more process resources may for example but not limited thereto be energy, in particular electricity, water and/or gas. The resource usage data may therefore be data of resource usage, such as energy or electricity consumption, water and/or gas consumption. For example, the resource usage data may comprise energy consumption of each of the at least one process module for a specific industrial process.

In an example, the method may further comprise providing the resource usage data to a process control system of the process plant and at least partially controlling the usage of the one or more process resources in the industrial process based on the resource usage data. It is noted that a process control system and a process planning/engineering system can be used interchangeably in the present application. Furthermore, the wording of process control system should not be construed to exclude the meaning of the process planning/engineering system. The process control system and the process planning/engineering system may be collectively called as the process control system, for simplicity. The process planning/engineering system may be a system which allows to plan, engineer, and/or automate components, associated services and processes taking place as part of the process plant in the engineering phase. The engineering phase may be earlier than the operational phase, before a process of the process plant is set up and before the process plant requires a control system. For simplicity, the present disclosure is described with the "process control system". However, it should be understood that the "process planning/engineering system" can be used instead of the "process control system". In case of the "process planning/engineering system", the process plant in the engineering phase is referred. The process control system may be a system that manages, commands, directs and/or regulates a behaviour, state and/or setting of the at least one process module for the industrial process. For example, a process module for mixing substances may be needed for an industrial process requiring a step of mixing but may not be needed for another industrial process which does not require the step of mixing substances. In another example, if there are multiple process modules for mixing, the process module may not be needed for a specific industrial process requiring mixing by only the other process modules for mixing. Accordingly, the process control system may identify a required action of each of the at least one process module for each industrial process and command the action respectively. Furthermore, the process control system may control the usage of the one or more process resources by adapting the action to save the usage of the one or more process resources. For example, the operational and environmental conditions of the at least one process module may change during the industrial process. There may be a more preferred actions of the at least one process module considering the changed operational and environmental conditions of the at least one process module. In this case, the process control system may control the usage of the one or more process resources by identifying such changes and adapting the action during the industrial process.

In an example, the process plant data may be in an operational format for operating the process control system of the process plant. In another example, the process plant data may be in an operational format for operating the process planning/engineering system of the process plant. The process plant data may be processed by the GAI processing component such that information relating to the usage of one or more process resources is extracted from the process plant data and structured into a structured format of the resource usage data. The operational format may be a format appropriate to operate the process control system. The operational format may be used as an input of the process control system without requiring converting of the format. For example, the file format may be a module type package, MTP. The MTP may be a standard file format used for configuration and implementation of modular process plants. The MTP format can be used in the engineering phase of the process plant and in the operational phase of the process plant. In another example, the file format may be an AAS format. The AAS format can be used in the engineering phase of the process plant and in the operational phase of the process plant. In other examples, the file format may be a file format suitable for operating a state-based process control system. The structured format may be a file format to be used as an input of a resource usage model. As such, the structured format may comprise the resource usage information in a structured and standardized form. Also, data or information inside the process plant data that is not relevant for the resource usage may be omitted in the resource usage data. Accordingly, the resource usage data may in particular be smaller in size than the process plant data. Specifically, for obtaining the resource usage data, the GAI processing component may filter or consider only the information contained in the process plant data and structure it into the structured and standardized form, which is related or relevant to resource usage data, at least according to the GAI processing component. For filtering or considering this data and bringing or structuring it into the structured and standardized form, the GAI processing component may be pre-trained or fine-tuned as explained above and/or the GAI processing component may be programmed or instructed, e.g. based on input from a human operator, which information to filer or consider and/or how the structured and standardized form is supposed to be.

In an example, the resource usage data may be structured at least with identifiers and/or parameters of process units of the at least one process module, the resource usage data indicating the usage of the one or more process resources with respect to the identifiers and/or parameters. The identifiers may for example be indexes or names that identify the process units. The parameters may for example be variables that change characteristics of the process units. Therefore, the resource usage data may be structured to identify the usage of each process unit with its identifier and when the characteristic of the process unit varies.

In an example, the process plant data may be processed by the GAI processing component and/or the resource usage data may be further processed for obtaining a resource usage model defining functions indicative of the usage of the one or more process resources in the industrial process. The resource usage model may be a model providing information of the usage of the one or more process resources. The resource usage model may be specified for each industrial process. The resource usage model may be a management model of the usage of the one or more process resources. Therefore, the resource usage model may not be limited to a model providing information of the usage, that is, consumed resources but may be a model providing information of substances generated from the resources in the industrial process, such as wastes. The GAI processing component may be configured to fill or generate the resource usage model with the resource usage data.

In an example, accordingly, the resource usage model may be an energy management model, a fluid management model and/or a waste management model. The energy management model may be a model configured to manage energy used in the process plant. The energy may for example originate from energy source, such as gas, oil, coal or electric energy. The fluid management model may be a model configured to manage fluid used in the process plant. The fluid may for example be gas or liquid. For example, the fluid management model may be a water management model configured to manage water usage and generation in process plant. The waste management model may be a model configured to manage waste generated in the process plant. The waste may be a substance which are not to be used in the process of the process plant as a resource but to be disposed out of the process plant, which, however, does not mean that the waste cannot be used somewhere else. For example, the waste may be chemical waste, dirt, gravel and scrap metals.

In an example, the resource usage model may comprise a first function indicative of an amount of the one or more process resources in the at least one process module. In particular, the resource usage model may further comprise a second function indicative of a thermal state of the at least one process module. The amount of the one or more process resources may be a delivered amount of the one or more process resources and a consumption amount of the one or more process resources. For example, the resource usage model may be an energy management model. The first function may indicate how much energy has been delivered to a process module for a specific industrial process and how much energy has been consumed in the process module during the industrial process. With the first function, the amount of the one or more process resources can be identified for each process module for each industrial process. The thermal state of the at least one process module may be a temperature of the at least one process module. The temperature of the at least one process module may be a temperature of a substance to be processed by the at least one process module or a temperature of the at least one process module itself. The at least one process module may perform differently depending on the thermal state of the at least one process module. For example, the one or more process resources may be arranged at a place of the process plant where the temperature is higher than the rest of the process plant. In this case, the temperature of environment of the at least one process module may increase the temperature of the at least one process module which may affect the performance of the at least one process module. For instance, a process module configured to heat a temperature of a substance up may perform more efficiently, when the temperature of the process module is higher than the temperature of the substance. In a different example, a process module configured to cool a temperature of a substance may perform less efficiently, when the temperature of the process module is lower than the temperature of the substance. Furthermore, the thermal state of the at least one process module may vary based on a service of the at least one process module. For example, the service may be mixing two different substances which may react and generate heat when being mixed with each other. The at least one process module may perform better or worse when the thermal state of the at least one process module is changed. That is, the service to be operated in the at least one process module may affect the performance of the module. Depending on the performance of the at least one process module, the at least one process module may consume more resources than usual or less resources than usual. Therefore, the second function may be considered to adapt the usage of the one or more process resources.

In an example, the process plant data may be further indicative of two or more states and/or two or more services of the at least one process module of the process plant. The resource usage data may be indicative of different usage of the one or more process resources in the industrial process depending on each one of the states and/or services of the at least one process module. Each process module may have a state. The state may for example be "start", "stop", "running" and/or "paused". The service may be any action that works toward the completion of the industrial process, such as milling, heating or stirring of a substance, mixing two or more substances or reacting two or more substances to change property of the substance(s) or to generate another substance(s), reforming a substance or assembling two or more substances. Similar examples could be understood with materials, parts, products, for example, instead of substances. For example, the industrial process may be generating water from hydrogen and oxygen. The industrial process may comprise a plurality of services, such as measuring the hydrogen and the oxygen, mixing the hydrogen and the oxygen in a desired ratio, providing electrical spark to initiate a reaction of the hydrogen and the oxygen, cooling or heating during the reaction. Depending on the industrial process, the service of the at least one process module may vary. Moreover, the at least one process module may be configured for two or more services for an industrial process. Accordingly, the resource usage data may comprise different usage of the one or more process resources in the industrial process depending on each one of the states and/or services of the at least one process module. Since the resource usage data can provide the different usage of the one or more process resources, the resource usage model can be configured considering each one of the states and/or services of the at least one process module.

In an example, the configuration of the at least one process module of the process plant may relate at least to one or more of: a topology of the process plant, technical equipments of the at least one process module, a human-machine-interface of the process plant, services of the at least one process module, alarms of the at least one process module, states of the at least one process module, manuals and documentations of the at least one process module. The topology of the process plant may be information on how the at least one process module of the process plant is interrelated or arranged. To obtain the resource usage data of the process plant comprising the at least one process module, the topology of the process plant may be necessary. For example, the topology of the process plant may be used to identify steps of the industrial process and thereby identify which one of the at least one process module is to be performed at a certain step. Furthermore, the topology of the process plant may be used to identify dependencies of the at least one process module, specifically of different process modules of the process plant. The human-machine-interface of the process plant may be a feature or a component of the process control system that enables human operators to interact with the process plant itself or the at least one process module of the process plant. The human-machine-interface of the process plant may be a feature or a component of the process planning/engineering system that enables human operators to interact with the process plant itself or the at least one process module of the process plant. The process planning/engineering system may be a process planning/engineering tool. The human-machine-interface of the process plant may be used to identify which service of the at least one process module can be refined manually. The technical equipments of the at least one process module may include processing units, such as sensors, actuators and similar, of the at least one process module. The technical equipments of the at least one process module may provide, for example, a user manual or an operating instruction. The alarms of the at least one process module may be a signal for warning or alerting of danger of malfunctioning of the at least one process module. When there is an alarm on a process module, the industrial process of the process plant may be adapted, for example, by modifying a service of at least the alarmed process module by the process control system. Alternatively, when there is an alarm on the process module, the industrial process of the process plant may be ceased, for example, until a human operator confirms the recognition of the alarm.

In an example, the process plant data may be in a multimodal form and the GAI processing component may be based on a multimodal model or a system processing multimodal data such that the resource usage data is obtained by multimodal processing of the process plant data by the GAI processing component. Further to the configuration of the at least one process module, the process plant data may comprise information, such as certificates of the at least one process module, simulation models of the at least one process module and data sheets of the at least one process module. That is, the process plant data may comprise more than one data types, in other words, the process plant data may be in the multimodal form. The GAI processing component may be configured to obtain the resource usage data based on the process plant data in the multimodal form. Even if the process plant data comprises different multimodal information in various different data types for a different industrial process, the GAI processing component may be configured to fitting the process plant data in various multimodal form consistently in the structured format of the resource usage data. The filling in may be understood as structuring.

In an example, the GAI processing component may be fine-tuned based on specification data and/or specification data may be provided to the GAI processing component for obtaining resource usage data dependent on the specification data. The specification data may be indicative of one or more specifications associated with the process plant data. The specification data may be a specification of the process plant itself. For example, the specification data may be that the process plant comprises a separator. In this case, the resource usage data may be obtained for a resource usage model for the separator. For example, the specification data may be that the industrial process comprises a service. In this case, the resource usage data may be obtained for a resource usage model comprising the service. For example, the specification data may be that the process plant comprises optional process modules. In this case, the resource usage data may be obtained for a resource usage model depending on the optional process modules. The optional process modules may be identified by the parameters of process units of the optional process modules. Alternatively, the specification data may be a specification of the at least one process module of the process plant. For example, the specification data may be data sheets on hazard and operability analysis of the at least one process module. In this case, the resource usage data may be obtained for a resource usage model with a knowledge of when the at least one process module may explode under which pressure and/or temperature. For example, the specification data may be data sheets on sustainability usage of the at least one process module. In this case, the resource usage data may be obtained for a resource usage model with reference to sustainable operation of the at least one process module.

In an example, the GAI processing component may be based on a transformer network structure. The transformer network structure is a type of neural network that learns context and meaning by tracking relationships in sequential data. The transformer network structure may be based on an encoder-decoder architecture. The encoder may extract features from an input of the transformer network structure and the decoder uses the features to produce an output of the transformer network structure.

In an example, the transformer network structure may be configured to process the process plant data into a semantic representation of content of the process plant data and to obtain the resource usage data by processing the semantic representation of the content of the process plant data. In other words, the process plant data may be the input of the transformer network structure. The encoder of the transformer network structure may be configured to process the input, that is, the process plant data into the semantic representation of the content of the process plant data. The above-mentioned features may be the semantic representation of the content of the process plant data. The decoder of the transformer network structure may be configured to process the features, that is the semantic representation of the content of the process plant data into the output, that is the resource usage data.

However, the GAI processing component may not be limited to the transformer network structure. For example, the GAI processing component may be additionally or alternatively based on x-LSTMs (long short-term memories) and/or a state space model architecture, such as Mamba or Jamba setups.

According to an embodiment of the present invention, there is provided a computer program product comprising instructions which, when executed by a computer, cause the computer to carry out the method of any of the previous claims. The computer program product may be a computer program as such or a computer-readable medium.

According to an embodiment of the present invention, there is provided a data processing system comprising means for carrying out the computer-implemented method.

### DESCRIPTION OF THE DRAWINGS

Embodiments of the present invention, which are presented for better understanding the inventive concepts, but which are not be seen as limiting the invention, will now be described with reference to the figures in which:
- Figure 1: shows a flow diagram of a computer-implemented method;
- Figure 2: shows an example process plant and a GAI processing component; and
- Figure 3: shows an example structure of a GAI processing component.

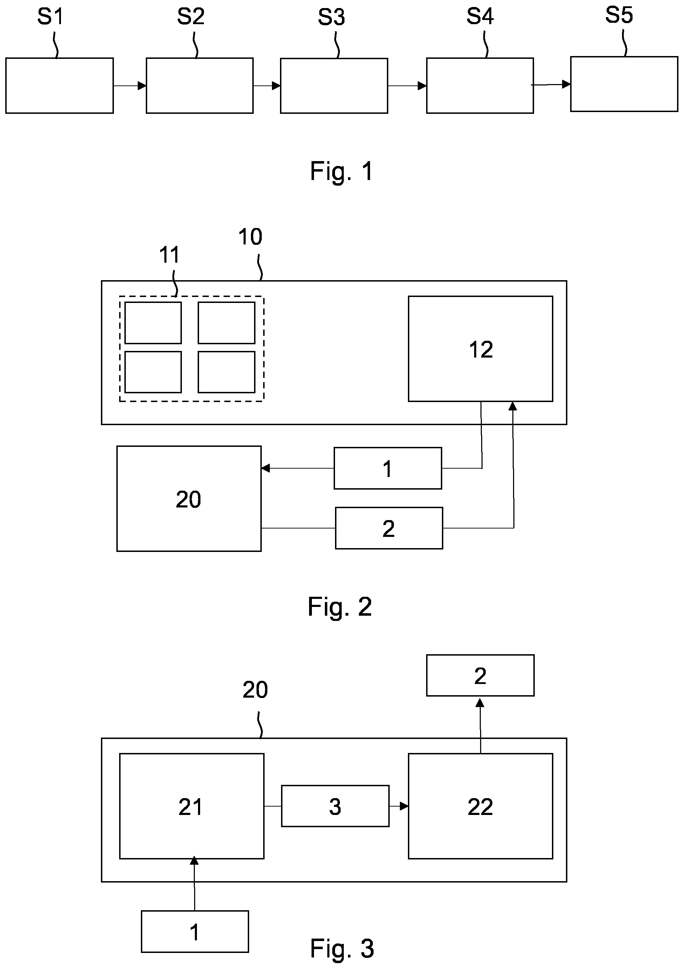

Figure 1 shows a flow diagram of computer-implemented method. In a first step S1, process plant data indicative of at least of a configuration of at least one process module of a process plant is obtained. Specifically, the process plant data may be indicative at least of configurations of several process modules in a process plant. Each one of these process modules can be responsible for a different step or part of the industrial process that the process plant executes.

In a second step S2, the process plant data is provided for processing by a generative artificial intelligence, GAI, processing component for obtaining resource usage data indicative of usage of one or more process resources in an industrial process of the at least one process module of the process plant.

In a third step S3, the resource usage data is obtained from the processing by the GAI processing component.

Optionally, the computer-implemented method may further comprise a fourth step S4. In the fourth step S4, the resource usage data is provided to a process control system of the process plant.

Further optionally, the computer-implemented method comprises a fifth step S5. In the fifth step S5, the usage of the one or more process resources in the industrial process is at least partially controlled based on the resource usage data.

Figure 2 shows an exemplary process plant 10 and an exemplary GAI processing component 20. The process plant 10 may comprise one or more process modules 11. Exemplary, four process modules 11 are shown, which may together form the entire industrial process or only part thereof, e.g. a part where a substance is mixed and each one of the process modules 11 is responsible with one or more processing units to ensure that process, e.g. the mixing. For example, one process module 11 may be preparing the substances to be mixed, where measurements can be taken by one or more process units of that process module 11. Another one of the process modules 11 may be mixing the substances in a tank or similar, where the mixing can be executed by actuators such as electric motors driving means inside the tank to mix the substances, the actuators being process units of that process module 11. Herein, for the sake of simplicity, the one or more process modules 11 are collectively referenced with the reference sign 11.

The process plant 10 may further comprise the process control system 12. Further, the GAI processing component 20 is shown in Figure 2. In this example, the process control system 12 of the process plant 10 provides the process plant data 1 to the GAI processing component 20 and obtains the resource usage data 2 from the GAI processing component 20. However, this is merely an example for an illustrative purpose. For example, the process plant 10 may further comprise an additional control system for communicating the process plant data 1 and the resource usage data 2 with the GAI processing component 20.

The GAI processing component 20 may be arranged outside of the process plant 10, as shown in Figure 2. For example, the GAI processing component may be arranged in an external cloud server accessible from the process plant 10 or a building apart from the process plant 10. Accordingly, the process plant 10 and the GAI processing component 20 may communicate in a wired manner or wirelessly with one another.

Figure 3 shows an example structure of the GAI processing component 20. The GAI processing component 20 may be a transformer network structure. The GAI processing component 20 may comprise an encoder 21 and a decoder 22. The encoder 21 may receive the process plant data 1 from the process plant 10. The encoder 21 may process the process plant into a semantic representation 3 of content of the process plant data and output the semantic representation 3. The decoder 22 may receive the semantic representation 3 from the encoder 21. The decoder 22 may process the semantic representation 3 into the resource usage data 2 and output the resource usage data 2.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of' may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope of the claims.

### LIST OF REFERENCE SIGNS

- 1: process plant data
- 2: resource usage data
- 3: semantic representation of content of the process plant data
- 10: process plant
- 11: process module
- 12: process control system
- 20: GAI processing component
- 21: encoder
- 22: decoder

## Claims

1. A computer-implemented method, comprising:
- obtaining process plant data (1) indicative at least of a configuration of at least one process module (11) of a process plant (10);
- providing the process plant data (1) for processing by a generative artificial intelligence, GAI, processing component for obtaining resource usage data (2) indicative of usage of one or more process resources in an industrial process of the at least one process module (11) of the process plant; and
- obtaining the resource usage data (2) from the processing by the GAI processing component (20).

2. The method of claim 1, the method further comprising:
- providing the resource usage data (2) to a process control system (12) of the process plant (10); and
- at least partially controlling the usage of the one or more process resources in the industrial process based on the resource usage data (2).

3. The method of claim 1 or 2, wherein the process plant data (1) is in an operational format for operating a process control system (12) of the process plant (10), and wherein the process plant data (1) is processed by the GAI processing component (20) such that information relating to the usage of one or more process resources is extracted from the process plant data (1) and structured into a structured format of the resource usage data (2).

4. The method of claim 3, wherein the resource usage data (2) is structured at least with identifiers and/or parameters of process units of the at least one process module (11), the resource usage data (2) indicating the usage of the one or more process resources with respect to the identifiers and/or parameters.

5. The method of any one of the previous claims, wherein the process plant data (1) is processed by the GAI processing component (20) and/or the resource usage data (2) is further processed for obtaining a resource usage model defining functions indicative of the usage of the one or more process resources in the industrial process.

6. The method of claim 5, wherein the resource usage model comprises a first function indicative of an amount of the one or more process resources in the at least one process module (11), and in particular wherein the resource usage model comprises a second function indicative of a thermal state of the least one process module.

7. The method of any one of the previous claims, wherein the process plant data (1) is further indicative of two or more states and/or two or more services of the at least one process module (11) of the process plant (10), and wherein the resource usage data (2) is indicative of different usage of the one or more process resources in the industrial process depending on each one of the states and/or services of the at least one process module (11).

8. The method of any one of the previous claims, wherein the configuration of the at least one process module (11) of the process plant (10) relates at least to one or more of: a topology of the process plant (10), technical equipments of the at least one process module (11), a human-machine-interface of the process plant (10), services of the at least one process module (11), alarms of the at least one process module (11), states of the at least one process module (11), manuals and documentations of the at least one process module (11).

9. The method of any one of the previous claims, wherein the process plant data (1) is in a multimodal form and the GAI processing component (20) is based on a multimodal model or a system processing multimodal data such that the resource usage data (2) is obtained by multimodal processing of the process plant data (1) by the GAI processing component (20).

10. The method of any one of the previous claims, wherein the GAI processing component (20) is fine-tuned based on specification data and/or specification data is provided to the GAI processing component (20) for obtaining resource usage data (2) dependent on the specification data, the specification data being indicative of one or more specifications associated with the process plant data.

11. The method of any one of the previous claims, wherein the GAI processing component (20) is based on a transformer network structure.

12. The method of claim 11, wherein the transformer network structure is configured to process the process plant data (1) into a semantic representation (3) of content of the process plant data (1) and to obtain the resource usage data (2) by processing the semantic representation (3) of the content of the process plant data (1).

13. The method of any one of the previous claims, wherein the resource usage model is an energy management model, a fluid management model, and/or a waste management model.

14. A computer program product comprising instructions which, when executed by a computer, cause the computer to carry out the method of any of the previous claims.

15. A data processing system comprising means for carrying out the method of any of claims 1 to 13.
